# EUROPÄISCHE PATENTSCHRIFT

(11) **EP 3 763 889 B1**
(45) Veröffentlichungstag und Bekanntmachung des Hinweises auf die Patenterteilung: **22.05.2024**
(21) Anmeldenummer: 20184366.1
(22) Anmeldetag: 07.07.2020
(51) Int. Cl.: E03C 1/04, B05B 1/30, G05D 7/01, E03C 1/02

(54) **SANITÄRE AUSLAUFARMATUR MIT AUSLAUFROHR**
SANITARY OUTLET FITTING WITH OUTLET PIPE
ARMATURE D'ÉCOULEMENT SANITAIRE DOTÉE D'UN TUBE D'ÉCOULEMENT

(30) Priorität: 09.07.2019 DE 102019210111
(43) Veröffentlichungstag der Anmeldung: 13.01.2021
(73) Patentinhaber: Hansgrohe SE, 77761 Schiltach (DE)
(72) Erfinder: ARMBRUSTER, Stefan, 77756 Hausach (DE); OBERT, Wolfgang, 77790 Steinach (DE)
(74) Vertreter: Patentanwälte Ruff, Wilhelm, Beier, Dauster & Partner mbB

(56) Entgegenhaltungen:
- EP-A1- 0 469 391
- WO-A1-2009/067083
- DE-U1- 8 435 378
- JP-A- H05 100 749
- US-A1- 2003 093 857

## Beschreibung

Die Erfindung bezieht sich auf eine sanitäre Auslaufarmatur mit einem Auslaufrohr und einem Fluidkanal im Auslaufrohr, der sich von einem Fluideintritt in das Auslaufrohr zu einem Fluidaustritt aus dem Auslaufrohr erstreckt.

Der Fluidkanal kann je nach Ausführung der Auslaufarmatur beispielsweise vom gesamten Innenraum eines mit seiner Außenseite eine Außenseite des Auslaufrohrs bildenden Rohrkörpers oder vom Innenraum eines durch einen solchen äußeren Rohrkörper hindurchgeführten, fluidführenden Schlauchs oder inneren Rohrs gebildet sein. Der Fluidkanal endet in Fluidströmungsrichtung mit einem Fluidaustritt, an dem ein in der Auslaufarmatur geführtes und von ihr bereitzustellendes Fluid, typischerweise Wasser, zur Benutzung durch einen Nutzer aus der Auslaufarmatur austritt.

Oftmals ist bei diesen Auslaufarmaturen am Fluidaustritt ein Partikelsieb, ein Luftsprudlerelement, ein Strahlreglerelement und/oder ein anderes, die Fluidströmung selbsttätig beeinflussendes Element angeordnet. In diesem Fall kann der Effekt auftreten, dass nach Abstellen der Fluidzufuhr noch unerwünscht lange Fluid aus dem Fluidaustritt nachtropft, wenn sich im Auslaufrohr durch das am Fluidaustritt angeordnete Element ein Staudruck aufgebaut hat.

Bei einer bestimmten Art dieser Auslaufarmaturen besitzt das Auslaufrohr einen U-förmigen Rohrbogenabschnitt, der in Gebrauchslage mit konkaver Krümmung in Fluidströmungsrichtung zunächst mit nach oben und anschließend mit nach unten weisender Richtungskomponente verläuft. Mit Gebrauchslage ist hierbei wie üblich diejenige Lage gemeint, die das Auslaufrohr einnimmt, wenn sich die sanitäre Auslaufarmatur und damit auch deren Auslaufrohr in Gebrauch befindet, z.B. nach Montage an einem gewünschten Gebrauchsort. Entsprechend diesem Verlauf des Rohrbogenabschnitts verläuft auch der Fluidkanal im Auslaufrohr in Gebrauchslage im Bereich des Rohrbogenabschnitts in Fluidströmungsrichtung konkav gekrümmt, d.h. unter Bildung eines oberen Umkehrpunktes zunächst mit nach oben und anschließend mit nach unten weisender Richtungskomponente, wobei der Fluidkanal am oberen Umkehrpunkt von seiner Erstreckung mit nach oben weisender Richtungskomponente in seine anschließende Erstreckung mit nach unten weisender Richtungskomponente wechselt. Derartige Auslaufarmaturen werden beispielsweise als Wasserausläufe von Mischerarmaturen und Absperrarmaturen an Waschtischen, Badewannen und Küchenspülen verwendet. Auslaufarmaturen dieser Art mit durch einen äußeren Rohrkörper hindurchgeführtem Schlauch bzw. Innenrohr sind in den Offenlegungsschriften DE 10 2012 212 303 A1 und US 2010/0213398 A1 offenbart. Eine Auslaufarmatur dieses Typs, bei dem ein äußerer Rohrkörper gleichzeitig den Fluidkanal bildet, ist in den Offenlegungsschriften US 2007/0295418 A1 und DE 10 2007 040 495 A1 offenbart.

Bei einer in der Offenlegungsschrift US 2003/0093857 A1 offenbarten sanitären Auslaufarmatur ist ein U-förmig konkav gekrümmtes Auslaufrohr eintrittsseitig mit einem Außenflansch versehen und mit einem axial vorstehenden Rohrendabschnitt in einen breiteren Abschnitt einer gestuft hülsenförmigen Rohraufnahme eingefügt und an letzterer durch Fixieren des Außenflanschs an einem korrespondierenden stirnseitigen Flansch der Rohraufnahme gehalten. An einem schmaleren Abschnitt der Rohraufnahme ist an einem gegenüberliegenden Stirnende ein Anschlussrohr gehalten. Im Übergang der beiden Abschnitte der Rohraufnahme ist innenseitig ein ringförmiger Sitz gebildet, auf dem ein strömungsregulierendes Element angeordnet und durch einen Schnappring gehalten ist, das dafür eingerichtet ist, eine laminare gleichmäßige Strömung im Auslaufrohr bereitzustellen.

Weitere herkömmliche sanitäre Auslaufarmaturen, in denen ein strömungsregulierendes Element insbesondere in Form eines Mengenreglerelements angeordnet ist, sind in der Gebrauchsmusterschrift DE 84 35 378 U1 und den Offenlegungsschriften WO 2009/067083 A1, JP H05-100749 A und EP 0 469 391 A1 offenbart.

Bei heutigen Auslaufarmaturen besteht zunehmend der Wunsch, die Fluiddurchflussmenge möglichst gering zu halten, um beispielsweise Wasser zu sparen. Dadurch kann bei den Auslaufarmaturen mit konkav gekrümmtem Auslaufrohr speziell der Effekt auftreten, dass im Bereich des konkav gekrümmten Rohrbogenabschnitts des Fluidkanals eine Luftblase bzw. ein Luftpolster oberhalb des Niveaus des oberen Umkehrpunkts verbleibt und wegen der relativ niedrigen Durchflussrate nicht durch den Fluidfluss ausgespült wird. Dies kann, wenn sich am Fluidaustritt ein durchflussregelndes oder durchflussbegrenzendes oder durchflusshemmendes Element, wie z.B. ein Strahlformer, befindet, dazu führen, dass sich im aktiven Gebrauch der Armatur ein Innendruck im Fluidkanal aufbaut, der die im konkav gekrümmten Bogenbereich des Fluidkanals vorhandene Luftblase komprimiert. Bei einer anschließenden Absperrung der Fluidzufuhr an einer stromaufwärts des oberen Umkehrpunkts bzw. des Luftpolsters liegenden Absperrstelle, z.B. durch ein dort noch innerhalb der Armatur oder dieser vorgelagert angeordnetes, nutzerbetätigtes Absperrventil, baut sich der Fluiddruck im Fluidkanal ab, wodurch sich das komprimierte Luftpolster im Bogenbereich des Fluidkanals wieder ausdehnt. Diese Luftpolsterausdehnung kann dazu führen, dass unerwünscht lange Restfluid nachläuft, d.h. noch aus dem Fluidaustritt herausläuft bzw. nachtropft. Ein ähnliches unerwünschtes Nachtropfen kann aufgrund eines Staudrucks stromaufwärts eines am Fluidaustritt angeordneten, strömungsbeeinflussenden Elements auch bei den gattungsgemäßen Auslaufarmaturen auftreten, bei denen das Auslaufrohr keinen U-förmig nach oben gebogenen Rohrabschnitt aufweist.

Der Erfindung liegt als technisches Problem die Bereitstellung einer sanitären Auslaufarmatur der eingangs genannten Art zugrunde, mit der sich das erwähnte, längere Nachlaufen bzw. Nachtropfen von Restfluid aus dem Fluidaustritt des Fluidkanals nach Absperrung der Fluidzufuhr vermeiden lässt.

Die Erfindung löst dieses Problem durch die Bereitstellung einer sanitären Auslaufarmatur mit den Merkmalen des Anspruchs 1.

Diese Auslaufarmatur beinhaltet ein Mengenreglerelement, das in einem hierfür vorgesehenen Einsatzabschnitt des Fluidkanals angeordnet ist und das die am Fluidaustritt des Fluidkanals abgebbare Fluidmenge selbsttätig regelnd festlegt. Der Einsatzabschnitt und damit das dort eingesetzte Mengenreglerelement befindet sich charakteristischerweise im Bereich des Fluideintritts und/oder, wenn das Auslaufrohr einen U-förmigen, in Gebrauchslage konkav gekrümmten Rohrbogenabschnitt aufweist und der Fluidkanal im Bereich des Rohrbogenabschnitts unter Bildung eines in Gebrauchslage oberen Umkehrpunktes verläuft, stromaufwärts des oberen Umkehrpunktes.

Unter der selbsttätig regelnden Festlegung der am Fluidaustritt abgebbaren Fluidmenge durch das Mengenreglerelement ist zu verstehen, dass das Mengenreglerelement diejenige Komponente der Auslaufarmatur ist, welche die am Fluidaustritt von der Armatur abgegebene Fluidmenge bestimmt, wobei das Mengenreglerelement diese Fluidmenge selbsttätig regelt. Derartige Mengenreglerelemente sind dem Fachmann an sich bekannt, was daher hier keiner näheren Erläuterungen bedarf. Beispielsweise sind derartige Mengenreglerelemente in Ausführungen geläufig, bei denen ein gummielastischer Ring abhängig vom anstehenden Fluiddruck eine oder mehrere Durchlassöffnungen für das in der Armatur geführte Fluid mehr oder weniger absperrt, d.h. den für das Fluid effektiv zur Verfügung stehenden Durchflussquerschnitt abhängig vom anstehenden Fluiddruck variabel einstellt, insbesondere einen mit ansteigendem Fluiddruck geringer werdenden Durchflussquerschnitt. Mit anderen Worten hält das Mengenreglerelement die Fluiddurchflussmenge selbsttätig auch bei Druckschwankungen des zugeführten Fluids im Wesentlichen konstant.

Da das Mengenreglerelement dafür eingerichtet bzw. daraufhin ausgelegt ist, dass es diejenige Komponente der Armatur ist, welche die am Fluidaustritt des Fluidkanals und damit der Armatur im aktiven Betrieb abgegebene Fluidmenge bestimmt, kann sich im aktiven Betrieb kein Staudruck des Fluids stromabwärts des Mengenreglerelements aufbauen, denn das Mengenreglerelement lässt gemäß dieser Auslegung jeweils nur diejenige Fluidmenge passieren, die am Fluidaustritt auch ohne erneuten Druckaufbau abgegeben werden kann, so dass sich das Fluid im Bereich zwischen dem Mengenreglerelement und dem Fluidaustritt nicht stauen kann. Als Folge hiervon braucht nach Abstellen der Fluidzufuhr kein Staudruck abgebaut werden, und kann es auch nicht zu einem Kompressionseffekt für eine Luftblase kommen, die sich eventuell oberhalb des Niveaus des oberen Umkehrpunkts in einem konkav gekrümmten Bereich des Fluidkanals gebildet hat, da sich dieser Bereich stromabwärts des Mengenreglerelements befindet.

Demgemäß vermeidet die erfindungsgemäße Auslaufarmatur ein längeres Nachtropfen bzw. Nachlaufen von Restfluid nach Absperren der Fluidzufuhr aufgrund Volumenausdehnung eines zuvor komprimierten Luftpolsters im konkav gekrümmten Fluidkanalabschnitt oder aufgrund eines anderweitig verursachten Staudrucks von Fluid im Auslaufrohr. Es versteht sich, dass stromabwärts des Mengenreglerelements und insbesondere am Fluidaustritt bei Bedarf optional strömungsbeeinflussende Elemente herkömmlicher Art angeordnet sein können, z.B. ein Partikelsieb, ein Luftsprudlerelement und/oder ein Strahlregler, solange diese Elemente die am Fluidaustritt abgebbare Fluidmenge nicht weitergehend einschränken als durch das stromaufwärtige Mengenreglerelement vorgegeben.

Weiter beinhaltet das Auslaufrohr eintrittsseitig eine Befestigungshülse, die ein Befestigungsmittel zur Befestigung an einem Rohrtragteil sowie eine Einsatzaufnahme aufweist, in welcher ein Einsatzkörper aufgenommen ist, der das Mengenreglerelement enthält. Dabei ist die Befestigungshülse im Inneren des Auslaufrohres aufgenommen und das Auslaufrohr durch ein Schwenklagerungsmittel schwenkbeweglich an der Befestigungshülse gehalten. Dies bietet unter anderem den Vorteil einer Doppelfunktionalität der Befestigungshülse einerseits zum Befestigen des Auslaufrohrs an einem Rohrtragteil und andererseits zum Aufnehmen des das Mengenreglerelement enthaltenden Einsatzkörpers. Bei dem Rohrtragteil kann es sich beispielsweise um eine angrenzende Befestigungsfläche der Auslaufarmatur selbst handeln, z.B. zum Anbringen des Auslaufrohrs an einem zugeordneten Rohranschlussbereich eines Gehäuses der Armatur, oder um einen zugeordneten Bereich einer nicht zur Armatur gehörigen Unterlage, wie einer Waschtischfläche, einer Badewannenfläche oder einer Küchenspülenfläche, an dem das Auslaufrohr in diesem Fall angebracht wird.

In einer Weiterbildung der Erfindung befindet sich der Einsatzabschnitt des Fluidkanals, in dem das Mengenreglerelement angeordnet, insbesondere eingesetzt, ist, in einem geradlinig verlaufenden Rohreintrittsabschnitt des Auslaufrohrs. Der geradlinige Verlauf dieses eintrittsseitigen Abschnitts des Auslaufrohrs bietet in Kombination mit der Maßnahme, dort den Einsatzabschnitt des Fluidkanals zum Anordnen des Mengenreglerelements vorzusehen, für viele Anwendungen konstruktive und funktionelle Vorteile.

In einer Weiterbildung der Erfindung beinhaltet die Auslaufarmatur ein Partikelsieb, das im Einsatzkörper stromaufwärts des Mengenreglerelements angeordnet ist. Das Partikelsieb kann auf diese Weise störende Schmutz- oder Kalkpartikel und dergleichen vom Mengenreglerelement fernhalten, und der zum Anordnen des Mengenreglerelements dienende Einsatzkörper nimmt zusätzlich das Partikelsieb auf, so dass zum Anordnen des Partikelsiebs kein zusätzliches Bauteil benötigt wird.

In einer Weiterbildung der Erfindung umfasst das Auslaufrohr einen Rohrkörper und eine mit dem Rohrkörper eintrittsseitig an dessen Innenseite starr verbundene Verstärkungshülse, über die der Rohrkörper schwenkbeweglich an der Befestigungshülse gehalten ist, wobei die Verstärkungshülse die Befestigungshülse koaxial umgibt. Dies stellt eine konstruktiv vorteilhafte Ausführung für die Auslaufarmatur dar, da das Auslaufrohr im Gebrauch verschwenkbar ist.

In einer Weiterbildung beinhaltet die Armatur eine drehfest mit der Befestigungshülse verbundene Schwenkbegrenzungshülse und einen an der Verstärkungshülse radial nach innen vorstehenden Anschlagnocken, der mit der Schwenkbegrenzungshülse zur Schwenkwinkelbegrenzung für die Schwenkbewegung des Auslaufrohrs zusammenwirkt. Dies stellt eine konstruktiv vorteilhafte Realisierung für eine in bestimmten Anwendungsfällen gewünschte, anschlagdefinierte Begrenzung des für das Verschwenken des Auslaufrohrs maximal möglichen Schwenkwinkels dar.

In einer Weiterbildung der Erfindung umfasst das Mengenreglerelement einen perforierten Scheibenbereich mit mindestens einer Durchlassöffnung und einen sich abhängig von einem anstehenden Fluiddruck verformenden Regulierkörper, der einen Durchlassquerschnitt der mindestens einen Durchlassöffnung fluiddruckabhängig mit zunehmendem Fluiddruck verringernd einstellt. Dies stellt eine für den vorliegenden Anwendungsfall konstruktiv und funktionell vorteilhafte, mit relativ geringem Aufwand realisierbare Ausführung des Mengenreglerelements dar.

In einer Weiterbildung der Erfindung beinhaltet die Auslaufarmatur ein am Fluidaustritt des Fluidkanals angeordnetes Luftsprudler- und/oder Strahlreglerelement. Das Luftsprudler- und/oder Strahlreglerelement kann von irgendeinem geeigneten herkömmlichen Aufbau sein und dient in an sich bekannter Weise zur Luftbeimischung und/oder Strahlregelung für einen am Fluidaustritt aus der Armatur austretenden Fluidstrahl.

Vorteilhafte Ausführungsformen der Erfindung sind in den Zeichnungen dargestellt und werden nachfolgend beschrieben. Hierbei zeigen:
- Fig. 1: eine Längsschnittansicht einer sanitären Auslaufarmatur mit ihren vorliegend interessierenden Komponenten,
- Fig. 2: eine Detailansicht eines Bereichs II in Fig. 1 bzw. 5,
- Fig. 3: eine Längsschnittansicht einer Befestigungshülse mit Befestigungsmittel und einer Einsatzaufnahme mit darin aufgenommenem, ein Mengenreglerelement enthaltendem Einsatzkörper,
- Fig. 4: eine Längsschnittansicht des in Fig. 3 verwendeten Einsatzkörpers mit dem Mengenreglerelement und mit einem Partikelsieb und
- Fig. 5: eine Längsschnittansicht entsprechend Fig. 1 für eine Variante der Auslaufarmatur.

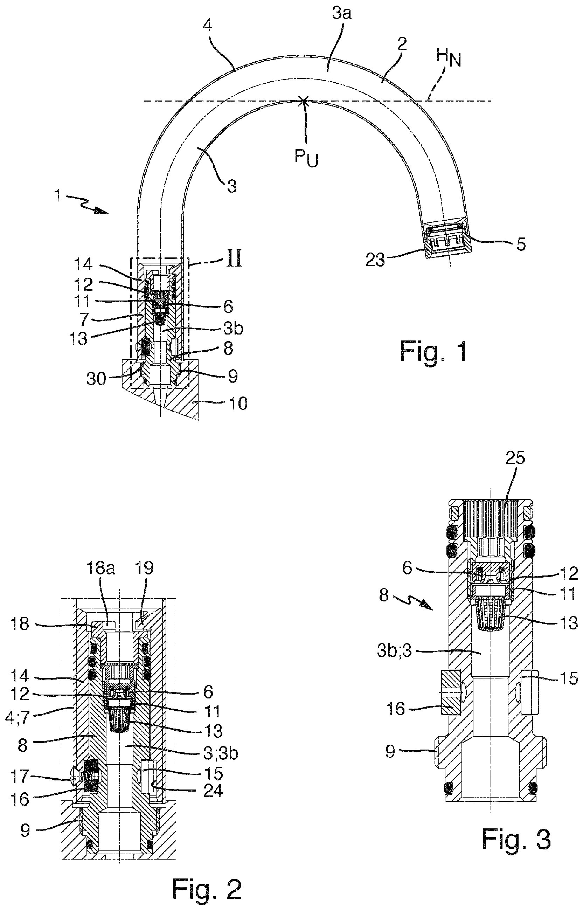

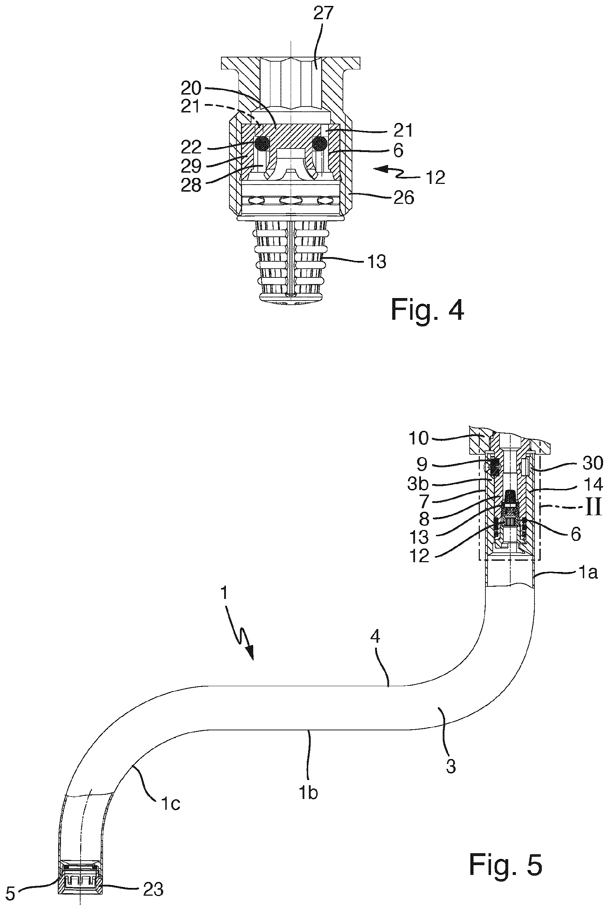

Die in den Fig. 1 bis 5 nur mit ihren vorliegend relevanten Komponenten für zwei verschiedene Auslaufrohrgestaltungen gezeigte, sanitäre Auslaufarmatur weist ein Auslaufrohr 1 auf, das in der Ausführung der Fig. 1 bis 4 einen U-förmigen Rohrbogenabschnitt 2 beinhaltet und in der Ausführung von Fig. 5 zweifach um je ca. 90° gebogen verläuft.

In der in Fig. 1 gezeigten Gebrauchslage der Auslaufarmatur der Fig. 1 bis 4 und damit auch in Gebrauchslage des Auslaufrohrs 1 und des Rohrbogenabschnitts 2 ist der Rohrbogenabschnitt 2 konkav gekrümmt, d.h. er erstreckt sich in Fluidströmungsrichtung zunächst mit nach oben weisender und anschließend mit nach unten weisender Richtungskomponente, jeweils in Kombination mit einer horizontalen Erstreckungskomponente. Auch in Fig. 5 ist die dortige Ausführungsvariante in Gebrauchslage des Auslaufrohrs 1 gezeigt, wobei in diesem Fall das Auslaufrohr 1 in Gebrauchslage und in Fluidströmungsrichtung gesehen einen im Wesentlichen vertikal nach unten verlaufenden eintrittsseitigen Rohrabschnitt 1a, einen im Wesentlichen horizontal verlaufenden mittleren Rohrabschnitt 1b und einen im Wesentlichen vertikal nach unten verlaufenden austrittsseitigen Rohrabschnitt 1c aufweist.

Des Weiteren weist die Auslaufarmatur einen Fluidkanal 3 im Auslaufrohr 1 auf, der sich von einem Fluideintritt 30 in das Auslaufrohr 1 zu einem Fluidaustritt 5 aus dem Auslaufrohr 1 erstreckt. Im gezeigten Beispiel ist der Fluidkanal 3, d.h. der fluidführende Kanal der Auslaufarmatur im Auslaufrohr 1, vom gesamten Innenraum eines Rohrkörpers 4 gebildet, dessen Außenseite gleichzeitig die Außenseite des Auslaufrohrs 1 bildet, d.h. das Auslaufrohr 1 besitzt in diesem Fall keinen weiteren, z.B. koaxial angeordneten Rohr- oder Schlauchkörper zur Fluidführung. In alternativen Ausführungen ist der Fluidkanal 3 von einem im Inneren des äußeren Rohrkörpers 4 verlaufenden, fluidführenden, inneren Schlauch-/Rohrkörper gebildet.

Der Fluidkanal 3 verläuft bei der Ausführungsvariante der Fig. 1 bis 4 im Bereich des Rohrbogenabschnitts 2 wie dieser konkav gekrümmt unter Bildung eines in Gebrauchslage oberen Umkehrpunkts Pu Der Umkehrpunkt Pu befindet sich definitionsgemäß am höchsten Punkt der inneren, unteren Krümmungslinie des gekrümmt, d.h. gebogen, verlaufenden Abschnitts des Fluidkanals 3, wie in Fig. 1 dargestellt, d.h. der Umkehrpunkt Pu ist der höchste Punkt der inneren, unteren Krümmungslinie des Rohrbogenabschnitts 2 des den Fluidkanal 3 bildenden Rohrkörpers 4 bzw. der höchste Punkt der inneren, unteren Krümmungslinie des inneren Schlauch-/Rohrkörpers.

Die Höhenlage des oberen Umkehrpunkts Pu definiert ein in Fig. 1 gestrichelt wiedergegebenes Höhenniveau H_{N}, über dem sich im Betrieb der Armatur potenziell in einem entsprechenden oberen Bereich 3a des Fluidkanals 3 eine Luftblase bzw. ein Luftpolster bilden kann, wenn die Menge an durch den Fluidkanal 3 hindurchfließendem Fluid nicht so groß ist, dass das Fluid den ganzen Querschnitt des Fluidkanals 3 auch in dessen oberem Bereich 3a ausfüllt. Das Höhenniveau H_{N} stellt diejenige Höhe dar, bis zu der Fluid im Bereich stromaufwärts des oberen Umkehrpunkts Pu im Fluidkanal 3 stehen bleiben kann, wenn die Fluidzufuhr zum Auslaufrohr 1 bzw. zum Fluidkanal 3 abgestellt wird. Derjenige Fluidanteil, der beim Absperren der Fluidzufuhr zunächst über dem Höhenniveau H_{N} oder in einem stromabwärtigen Abschnitt des Fluidkanals 3 bis zum Fluidaustritt 5 des Fluidkanals 3 vorliegt, strömt noch aus dem Fluidaustritt 5 aus. Des Weiteren beinhaltet die sanitäre Auslaufarmatur ein in einem Einsatzabschnitt 3b des Fluidkanals 3 angeordnetes Mengenreglerelement 6, das die am Fluidaustritt 5 des Fluidkanals 3 abgebbare Fluidmenge selbsttätig regelnd festlegt. Im Beispiel der Fig. 1 bis 4 befindet sich der Einsatzabschnitt 3b und damit das Mengenreglerelement 6 im Bereich des Fluideintritts 30 in das Auslaufrohr 1 oder stromabwärts davon an anderer Stelle im Fluidkanal 3 stromaufwärts des oberen Umkehrpunkts Pᵤ. Im Beispiel der Fig. 5 befindet er sich im Bereich des Fluideintritts 30 in das Auslaufrohr 1 und damit im eintrittsseitigen Rohrabschnitt 1a des Auslaufrohrs 1. Durch das Mengenreglerelement 6 lässt sich ohne Interaktion durch einen Benutzer die am Fluidaustritt 5 des Fluidkanals 3 ausströmende Fluidmenge auch dann konstant halten, wenn in der Fluidzufuhr Fluiddruckschwankungen auftreten.

In entsprechenden Ausführungen befindet sich wie im gezeigten Beispiel der Einsatzabschnitt 3b des Fluidkanals 3 in einem geradlinig verlaufenden Rohreintrittsabschnitt 7 des Auslaufrohrs 1. In alternativen Ausführungen des Typs mit konkav gekrümmtem Auslaufrohr befindet sich der Einsatzabschnitt 3b, in welchem das Mengenreglerelement 6 angeordnet bzw. eingesetzt ist, an anderer Stelle stromaufwärts des oberen Umkehrpunkts Pu, z.B. in einem eintrittsseitigen Bereich des gekrümmten Rohrbogenabschnitts 2 bzw. Fluidkanalabschnitts.

Weiter weist das Auslaufrohr 1 eintrittsseitig eine Befestigungshülse 8 auf, die ein Befestigungsmittel 9 zur Befestigung an einem Rohrtragteil 10 und eine Einsatzaufnahme 11 aufweist, in der ein das Mengenreglerelement 6 enthaltender, z.B. zylinderförmiger Einsatzkörper 12 aufgenommen ist. Im gezeigten Beispiel ist der Einsatzkörper 12 mit einem Außengewinde 26 lösbar in ein korrespondierendes Innengewinde der Einsatzaufnahme 11 eingeschraubt. Optional weist der Einsatzkörper 12 eine Werkzeugansatzkontur 27, z.B. eine Innensechskantkontur, auf, an der ein entsprechendes Werkzeug als Schraubhilfe angesetzt werden kann.

Das Befestigungsmittel 9 kann beispielsweise eine Schraubverbindung, wie gezeigt, alternativ ein anderes herkömmliches Befestigungsmittel zur vorzugsweise lösbaren Festlegung der Befestigungshülse 8 am Rohrtragteil 10 sein. Das Rohrtragteil 10 ist beispielsweise ein zugehöriger Rohranschlussbereich der Auslaufarmatur bzw. eines Armaturengehäusekörpers, alternativ ein das Auslaufrohr 1 tragender Teil einer Unterlage, an oder auf der sich die Auslaufarmatur befindet, wie eine Waschtisch- oder Badewannen- oder Küchenspülenfläche.

In entsprechenden Ausführungen besitzt die Auslaufarmatur wie im gezeigten Beispiel ein Partikelsieb 13, das im Einsatzkörper 12 stromaufwärts des Mengenreglerelements 6 angeordnet ist. Damit lassen sich Schmutz- und Kalkpartikel etc. vom Mengenreglerelement 6 fernhalten.

In vorteilhaften Realisierungen umfasst das Auslaufrohr 1 wie beim gezeigten Beispiel den Rohrkörper 4 und eine mit dem Rohrkörper 4 eintrittsseitig an dessen Innenseite starr verbundene Verstärkungshülse 14, über die der Rohrkörper 4 schwenkbeweglich an der Befestigungshülse 8 gehalten ist, wobei die Verstärkungshülse 14 die Befestigungshülse 8 koaxial umgibt. Die Verstärkungshülse 14 kann unlösbar oder alternativ lösbar mit dem Rohrkörper 4 verbunden sein. In alternativen, nicht gezeigten Ausführungen ist das Auslaufrohr 1 durch andere herkömmliche Schwenklagerungsmittel schwenkbeweglich an der Befestigungshülse 8 gehalten. Die Verstärkungshülse 14 ist optional und kann in entsprechenden Ausführungen fehlen.

Zur schwenkbeweglichen Halterung des Rohrkörpers 4 an der Befestigungshülse 8 dient im gezeigten Beispiel ein Schwenklager, das eine ringförmige Ausnehmung 15 am Außenumfang der Befestigungshülse 8 und ein in dieser Ausnehmung 15 drehbar angeordnetes, bogenförmiges Schwenkführungselement 16 umfasst, mit dem der Rohrkörper 4 samt Verstärkungshülse 14 mittels einer Schraube 17 verbunden ist. Das Schwenkführungselement 16 kann wie gezeigt über eine ringförmige Ausnehmung 24 in einem Stirnendbereich der Verstärkungshülse 14 in die Verstärkungshülse 14 hinein bzw. heraus gelangen. Dadurch kann zur Demontage der Armatur der Rohrkörper 4 samt Verstärkungshülse 14 nach Lösen der Schraube 17 von der Befestigungshülse 8 axial abgezogen werden, wonach die Befestigungshülse 8 vom Rohrtragteil 10 gelöst werden kann.

In einer vorteilhaften Realisierung besitzt die Auslaufarmatur wie im gezeigten Beispiel der Fig. 1 bis 4, optional auch im Beispiel von Fig. 5, eine drehfest mit der Befestigungshülse 8 verbundene Schwenkbegrenzungshülse 18 und einen an der Verstärkungshülse 14 radial nach innen vorstehenden Anschlagnocken 19. Die drehfeste Verbindung kann auf irgendeine geeignete herkömmliche Art realisiert sein, z.B. wie im gezeigten Beispiel durch Zusammenwirken eines inneren Zahnkranzes 25 an der Befestigungshülse 8 mit einem korrespondierenden äußeren Zahnkranz an der Schwenkbegrenzungshülse 18. Der Anschlagnocken 19 wirkt mit der Schwenkbegrenzungshülse 18 zur Schwenkwinkelbegrenzung für die Schwenkbewegung des Auslaufrohrs 1 zusammen, wozu im gezeigten Beispiel die Schwenkbegrenzungshülse 18 einen korrespondierenden, kreisbogenförmigen Gegenanschlagnocken 18a aufweist. Durch geeignete Wahl der Bogenlänge des Gegenanschlagnockens 18a und/oder des Anschlagnockens 19 lässt sich der maximal mögliche Schwenkwinkelbereich für das Auslaufrohr 1 in gewünschter Weise vorgeben.

In einer vorteilhaften Ausführung umfasst das Mengenreglerelement 6 wie im gezeigten Beispiel einen perforierten Scheibenbereich 20 mit einer oder mehreren Durchlassöffnungen 21, von denen in der Schnittansicht von Fig. 4 eine zu erkennen ist und eine weitere gestrichelt angedeutet ist, und einen sich abhängig von einem anstehenden Fluiddruck verformenden Regulierkörper 22, der einen Durchlassquerschnitt der mindestens einen Durchlassöffnung 21 fluiddruckabhängig mit zunehmendem Fluiddruck verringernd einstellt. Im gezeigten Beispiel ist der Regulierkörper 22 von einem gummielastischen O-Ring gebildet, der sich in einer ringförmigen Aufnahme 28 eines zylindrischen Einsatzbauteils 29 befindet, das an seinem stromabwärtigen Stirnende den perforierten Scheibenbereich 20 aufweist. Wenn sich der vom anströmenden Fluid ausgeübte Fluiddruck erhöht, verformt sich der gegen den Scheibenbereich 20 angedrückte O-Ring im Sinn einer stärkeren Abplattung und deckt dadurch einen zusätzlichen Teil des freien Durchlassquerschnitts der jeweiligen Durchlassöffnung 21 ab. Diese Verringerung des Durchlassquerschnitts wirkt dem erhöhten Fluiddruck im Sinn einer Konstanthaltung der vom Mengenreglerelement 6 durchgelassenen Fluidmenge entgegen. Umgekehrt nimmt die Abplattung des O-Rings mit abnehmendem Fluiddruck ab, so dass der O-Ring einen größeren Durchlassquerschnitt der jeweiligen Durchlassöffnung 21 freigibt, wodurch wiederum trotz nachlassendem Fluiddruck die das Mengenreglerelement 6 passierende Fluidmenge konstant gehalten wird.

In entsprechenden Realisierungen weist die Auslaufarmatur ein am Fluidaustritt 5 des Fluidkanals 3 angeordnetes Luftsprudler- und/oder Strahlreglerelement 23 auf, wie im gezeigten Beispiel. Damit kann die Charakteristik des aus dem Fluidaustritt 5 austretenden Fluid- bzw. Wasserstrahls in gewünschter Weise beeinflusst werden. Dabei sind das Mengenreglerelement 6 und das Luftsprudler- und/oder Strahlreglerelement 23 geeignet derart aufeinander abgestimmt, dass das Luftsprudler- und/oder Strahlreglerelement 23, oder alternativ ein anderes fluidströmungsbeeinflussendes Element am Fluidaustritt 5, die vom Mengenreglerelement 6 eingeregelte Fluidmenge nicht am Austreten am Fluidaustritt 5 behindert, d.h. das Luftsprudler- und/oder Strahlreglerelement 23 oder ein anderes dort angeordnetes, fluidströmungsbeeinflussendes Element erzeugt keinen Staudruck im Fluidkanal 3.

Insbesondere wird dadurch im Beispiel der Fig. 1 bis 4 auch vermieden, dass ein sich eventuell im gebogenen Fluidkanalbereich 3a über dem Höhenniveau H_{N} des oberen Umkehrpunkts Pu des Fluidkanals 3 befindliches Luftpolster durch einen solchen Staudruck im Fluidkanal 3 komprimiert wird, was dann wie oben erläutert zu dem unerwünschten längeren Nachlaufen bzw. Nachtropfen von Restfluid aus dem Fluidaustritt 5 heraus nach dem Abstellen der Fluidzufuhr führen könnte.

Wie die gezeigten und die weiteren oben erläuterten Ausführungsbeispiele deutlich machen, stellt die Erfindung eine vorteilhafte sanitäre Auslaufarmatur zur Verfügung, bei der ein unerwünscht langes Nachlaufen von Restfluid nach Abstellen der Fluidzufuhr aufgrund eines durch ein austrittsseitiges fluidströmungsbeeinflussendes Element verursachten Staudrucks im Auslaufrohr bzw. aufgrund Volumenausdehnung einer komprimierten Luftblase im Fluidkanal des Auslaufrohrs vermieden werden kann.

Dazu ist im Fluidkanal das Mengenreglerelement im Eintrittsbereich des Auslaufrohrs und/oder stromaufwärts des oberen Umkehrpunkts des konkav gekrümmten Rohrbogenabschnitts bzw. des korrespondierenden gebogenen Fluidkanalabschnitts angeordnet, das dafür ausgelegt ist, die am Fluidaustritt des Fluidkanals abgebbare Fluidmenge selbsttätig regelnd festzulegen. Diese Festlegung lässt sich insbesondere so treffen, dass sich stromabwärts des Mengenreglerelements und damit auch im Bogenbereich eines konkav nach oben gekrümmt verlaufenden Fluidkanals kein Fluiddruck aufbaut, der eine im oberen Bogenbereich des Fluidkanals befindliche Luftblase komprimieren könnte.

## Patentansprüche

1. Sanitäre Auslaufarmatur mit
- einem Auslaufrohr (1),
- einem Fluidkanal (3) im Auslaufrohr, der sich von einem Fluideintritt (30) in das Auslaufrohr (1) zu einem Fluidaustritt (5) aus dem Auslaufrohr (1) erstreckt,
- einem in einem Einsatzabschnitt (3b) des Fluidkanals (3) angeordneten Mengenreglerelement (6), das die an dem Fluidaustritt (5) des Fluidkanals (3) abgebbare Fluidmenge selbsttätig regelnd festlegt,
- wobei sich der Einsatzabschnitt (3b) im Bereich des Fluideintritts (30) befindet und/oder wobei das Auslaufrohr (1) einen U-förmigen, in Gebrauchslage konkav gekrümmten Rohrbogenabschnitt (2) aufweist, der Fluidkanal (3) im Bereich des Rohrbogenabschnitts (2) unter Bildung eines in Gebrauchslage oberen Umkehrpunktes (Pu) verläuft und sich der Einsatzabschnitt (3b) stromaufwärts des oberen Umkehrpunktes (Pu) befindet, und
- einer Befestigungshülse (8) an einer Eintrittsseite des Auslaufrohrs (1), wobei die Befestigungshülse (8) im Inneren des Auslaufrohres (1) aufgenommen ist, das Auslaufrohr (1) durch ein Schwenklagerungsmittel schwenkbeweglich an der Befestigungshülse (8) gehalten ist und die Befestigungshülse (8) ein Befestigungsmittel (9) zur Befestigung an einem Rohrtragteil und eine Einsatzaufnahme (11) aufweist, in der ein das Mengenreglerelement (6) enthaltender Einsatzkörper (12) aufgenommen ist.

2. Sanitäre Auslaufarmatur nach Anspruch 1, weiter **dadurch gekennzeichnet, dass** sich der Einsatzabschnitt (3b) des Fluidkanals (3) in einem geradlinig verlaufenden Rohreintrittsabschnitt (7) des Auslaufrohrs (1) befindet.

3. Sanitäre Auslaufarmatur nach Anspruch 1 oder 2, weiter **gekennzeichnet durch** ein im Einsatzkörper (12) stromaufwärts des Mengenreglerelements (6) angeordnetes Partikelsieb (13).

4. Sanitäre Auslaufarmatur nach einem der Ansprüche 1 bis 3, weiter **dadurch gekennzeichnet, dass** das Auslaufrohr (1) einen Rohrkörper (4) und eine mit dem Rohrkörper (4) eintrittsseitig an dessen Innenseite starr verbundene Verstärkungshülse (14) umfasst, über die der Rohrkörper (4) schwenkbeweglich an der Befestigungshülse (8) gehalten ist, wobei die Verstärkungshülse (14) die Befestigungshülse (8) koaxial umgibt.

5. Sanitäre Auslaufarmatur nach einem der Ansprüche 1 bis 4, weiter **gekennzeichnet durch** eine drehfest mit der Befestigungshülse (8) verbundene Schwenkbegrenzungshülse (18) und einen an der Verstärkungshülse (14) radial nach innen vorstehenden Anschlagnocken (19), der mit der Schwenkbegrenzungshülse (18) zur Schwenkwinkelbegrenzung für die Schwenkbewegung des Auslaufrohrs (1) zusammenwirkt.

6. Sanitäre Auslaufarmatur nach einem der Ansprüche 1 bis 5, weiter **dadurch gekennzeichnet, dass** das Mengenreglerelement (6) einen perforierten Scheibenbereich (20) mit mindestens einer Durchlassöffnung (21) und einen sich abhängig von einem anstehenden Fluiddruck verformenden Regulierkörper (22) umfasst, der einen Durchlassquerschnitt der mindestens einen Durchlassöffnung (21) fluiddruckabhängig mit zunehmendem Fluiddruck verringernd einstellt.

7. Sanitäre Auslaufarmatur nach einem der Ansprüche 1 bis 6, weiter **gekennzeichnet durch** ein am Fluidaustritt des Fluidkanals (3) angeordnetes Luftsprudler- und/oder Strahlformerelement (23).

## Claims

1. Sanitary outlet fitting, comprising
- an outlet tube (1),
- a fluid duct (3) within the outlet tube, which duct extends from a fluid input (30) into the outlet tube (1) to a fluid output (5) out of the outlet tube (1),
- a volume regulator element (6) disposed in an insert portion (3b) of the fluid duct (3), which regulator element sets the fluid volume deliverable at the fluid output (5) of the fluid duct (3) in an automatically controllable manner,
- wherein the insert portion (3b) is located in the region of the fluid input (30), and/or wherein the outlet tube (1) comprises a U-shaped tube bend portion (2) having a concave curvature in an operating position, in the region of the tube bend portion (2) the fluid duct (3) extends with formation of an upper reversal point (P_{U}) in the operating position, and the insert portion (3b) is located upstream of the upper reversal point (P_{U}), and
- a fastening sleeve (8) on an input side of the outlet tube (1), wherein the outlet tube (1) is received in the interior of the outlet tube (1), the outlet tube (1) is pivotably held on the fastening sleeve (8) by a pivot bearing means, and the fastening sleeve (8) comprises a fastening means (9) for fastening to a tube supporting part, and an insert receptacle (11) in which an insert body (12) including the volume regulator element (6) is received.

2. Sanitary outlet fitting according to claim 1, further **characterized in that** the insert portion (3b) of the fluid duct (3) is located in a tube input portion (7) of the outlet tube (1) extending in a straight line.

3. Sanitary outlet fitting according to claim 1 or 2, further **characterized by** a particle screen (13) disposed within the insert body (12) upstream of the volume regulator element (6).

4. Sanitary outlet fitting according to any one of claims 1 to 3, further **characterized in that** the outlet tube (1) comprises a tube body (4) and a reinforcing sleeve (14) rigidly connected to the tube body (4) on the interior side of the input side thereof, wherein the tube body (4) is pivotably retained on the fastening sleeve (8) via the reinforcing sleeve (14), and wherein the reinforcing sleeve (14) coaxially surrounds the fastening sleeve (8).

5. Sanitary outlet fitting according to any one of claims 1 to 4, further **characterized by** a pivot limiting sleeve (18) connected to the fastening sleeve (8) in a rotationally fixed manner and a stop cam (19) on the reinforcing sleeve (14) projecting radially inwards, which stop cam (19) cooperates with the pivot limiting sleeve (18) for pivot angle limiting of the pivoting movement of the outlet tube (1).

6. Sanitary outlet fitting according to any one of claims 1 to 5, further **characterized in that** the volume regulator element (6) comprises a perforated disk region (20) having at least one passage opening (21) and a regulating body (22) deforming in response to an applied fluid pressure, which regulating body (22) sets a passage cross section of the at least one passage opening (21) as a function of fluid pressure, reducing the passage cross section with increasing fluid pressure.

7. Sanitary outlet fitting according to any one of claims 1 to 6, further **characterized by** an aerator element and/or jet former element (23) arranged on the fluid output of the fluid duct (3).

## Revendications

1. Robinetterie sanitaire avec
- un tuyau de sortie (1),
- un canal de fluide (3) dans le tuyau de sortie, qui s'étend d'une entrée de fluide (30) dans le tuyau de sortie (1) vers une sortie de fluide (5) hors du tuyau de sortie (1),
- un élément régulateur de débit (6) disposé dans une portion d'insertion (3b) du canal de fluide (3), qui régule de manière autonome le débit de fluide pouvant etre distribué à la sortie du fluide (5) du canal de fluide (3),
- dans laquelle la portion d'insertion (3b) se trouve au niveau de l'entrée du fluide (30) et/ou dans laquelle le tuyau de sortie (1) comprend une portion de coude (2) en forme de U, incurvée de manière concave dans la position d'utilisation, le canal de fluide (3) s'étend au niveau de la portion de coude (2) en formant un point d'inversion supérieur (P_{U}) dans la position d'utilisation et la portion d'insertion (3b) se trouve en amont du point d'inversion supérieur (P_{U}) et
- un manchon de fixation (8) au niveau d'un côté d'entrée du tuyau de sortie (1), dans laquelle le manchon de fixation (8) est logé à l'intérieur du tuyau de sortie (1), le tuyau de sortie (1) est maintenu, à l'aide d'un moyen de palier pivotant, de manière pivotante au niveau du manchon de fixation (8) et le manchon de fixation (8) comprend un moyen de fixation (9) pour la fixation à une partie porteuse de tuyau et un logement d'insertion (11) dans lequel est logé un corps d'insertion (12) contenant l'élément régulateur de débit (6).

2. Robinetterie sanitaire selon la revendication 1, **caractérisée en outre en ce que** la portion d'insertion (3b) du canal de fluide (3) se trouve dans une portion d'entrée de tuyau (7), s'étendant en ligne droite, du tuyau de sortie (1).

3. Robinetterie sanitaire selon la revendication 1 ou 2, **caractérisée en outre par** un filtre à particules (13), disposé dans le corps d'insertion (12) en amont de l'élément régulateur de débit (6).

4. Robinetterie sanitaire selon l'une des revendications 1 à 3, **caractérisée en outre en ce que** le tuyau de sortie (1) comprend un corps de tuyau (4) et un manchon de renforcement (14) relié de manière rigide avec le corps de tuyau (4), côté entrée, sur son côté interne, par l'intermédiaire duquel le corps de tuyau (4) est maintenu de manière pivotante au niveau du manchon de fixation (8), dans laquelle le manchon de renforcement (14) entoure de manière coaxiale le manchon de fixation (8).

5. Robinetterie sanitaire selon la revendication 1 à 4, **caractérisée en outre par** un manchon de limitation de pivotement (18) relié de manière fixe en rotation avec le manchon de fixation (8) et une came de butée (19) dépassant radialement vers l'intérieur au niveau du manchon de renforcement (14), qui interagit avec le manchon de limitation de pivotement (18) afin de limiter le mouvement de pivotement du tuyau de sortie (1).

6. Robinetterie sanitaire selon l'une des revendications 1 à 5, **caractérisée en outre en ce que** l'élément régulateur de débit (6) comprend une partie de disque (20) perforée avec au moins une ouverture de passage (21) et un corps de régulation (22) se déformant en fonction d'une pression de fluide, qui ajuste une section transversale de passage de l'au moins une ouverture de passage (21) en fonction de la pression du fluide en la réduisant lorsque la pression du fluide augmente.

7. Robinetterie sanitaire selon la revendication 1 à 6, **caractérisée en outre par** un élément mousseur et/ou de formation de jet (23) disposé à la sortie du fluide du canal de fluide (3).
